# EUROPEAN PATENT APPLICATION

(11) **EP 4 378 663 A1**
(43) Date of publication of application: **05.06.2024**
(21) Application number: 22848746.8
(22) Date of filing: 26.07.2022
(51) Int. Cl.: B29C 64/106, B33Y 30/00, B33Y 70/10, B33Y 80/00, A23P 30/20

(54) **FOOD EXTRUDING DEVICE**

(30) Priority: 27.07.2021 ES 202130728
(71) Applicant: Cocuus System Iberica, S.l., 31190 Cizur Menor (Navarra) (ES)
(72) Inventor: LARUMBE BERAMENDI, Francisco Javier, 31190 CIZUR MENOR (NAVARRA) (ES)
(74) Representative: Cabinet Beau de Loménie
(86) International application number: PCT/ES2022/070491
(87) International publication number: WO 2023/007050

(57) **Abstract**

The invention relates to a food extruding device that allows food to be printed by means of 3D food printing technology, wherein the device comprises at least two stuffers (2), wherein each stuffer (2) is connected to an extrusion module (4) by means of at least one tube (3), wherein each stuffer (2) is configured to push a food substance through at least one tube (3) that connects each stuffer (2) to the extrusion module (4), and wherein the extrusion module (4) is configured to extrude the food substance coming from each stuffer (2) through the respective extrusion module (4) outlets.

## Description

### Technical field

The object of the present invention relates to a food extruding device that allows food to be processed and manufactured from meat or fish cell tissues by means of 3D printing technology.

As a result of the food extruding device object of the present invention, it is possible to achieve a high speed of food processing, which allows food to be produced on an industrial scale by means of 3D printing technology.

The food extruding device object of the present invention is applicable in the food industry and, more specifically, in the industry dedicated to the production of food by means of 3D printing.

### State of the art

The demand for meat in the world is reaching levels never seen before. It is estimated that by 2050 the demand for meat and fish will have doubled compared to today. This means that most likely in the coming years there will not be enough land available to produce meat from livestock farms.

Moreover, the current raising of animals for food production such as cattle, poultry and fish requires many natural resources (as an example, suffice it to say that to produce 1 kilogram of meat on a livestock farm, it is necessary to use about 15,000 liters of water). It is not sustainable from an ecological point of view and will definitely not be able to satisfy the future requirements of a population that is growing exponentially.

Additionally, livestock farms are responsible for more greenhouse gas emissions than all transportation combined. Likewise, the use of antibiotics in raising of livestock causes significant public health problems due to resistance and bacteria.

Therefore, at present, a part of the meat industry is investigating and searching for other alternative sources of proteins that replace animal protein, that are easy to produce in a much more efficient way. An example is the use of production systems based on the growth of cell tissues. It is in this context that the preparation of ingredients for manufacture, their subsequent texturing, flavoring and assembly in places of consumption, may be the most appropriate solution. It is from this idea that research in and the emerging industry of food 3D printing systems were born.

However, current food 3D printing systems require the movement of a print head from which the ingredients that will form the food are added, layer by layer. This technology is very slow, which to this day makes use of this technology for industrial food production unfeasible.

### Object of the invention

In order to solve the aforementioned drawbacks, the present invention relates to a food extruding device.

The food extruding device object of the present invention comprises at least two stuffers. Each stuffer is connected to an extrusion module by means of at least one tube. Each stuffer is configured to push a food substance through the at least one tube connecting each stuffer to the extrusion module. The extrusion module is configured to extrude the food substance coming from each stuffer through respective outlets of the extrusion module, with the outlets of the extrusion module being a plurality of outlet nozzles.

Using the device described above, it is possible to achieve 3D printing of foods (that incorporate at least two different food substances) continuously, producing a tube or column of extruded food, with different areas corresponding to different food substances, all without the need of moving any print head, thereby allowing a very high speed of food production. This makes the present device ideal for industrial-scale food production by means of 3D printing.

According to a possible embodiment of the invention, each outlet nozzle is connected, by means of a valve, to a first tube connected to one of the at least two stuffers, and to a second tube connected to the other one of the at least two stuffers.

In this way, by means of the corresponding valve, it is possible to control which food substance is going to be extruded through each of the outlet nozzles.

Preferably, the food extruding device comprises a host computer configured to command, through a controller card, the closing of the valve or the opening of the passage of the valve towards the first tube or the second tube. In this way, the host computer is responsible for controlling the process and the extrusion of any type of food substance through each extrusion nozzle, depending on the orders, instructions or configuration of the host computer.

Preferably, the food extruding device is configured to extrude, through each outlet nozzle, a food substance corresponding to the food substance indicated in a pixel of an image previously uploaded to the host computer or generated in the host computer from a scanning of a piece of food. The host computer is configured to command the closing or opening of the passage of the valve towards the first tube or towards the second tube based on the food substance indicated by each pixel of the image.

In this way, by previously scanning a piece of food (for example, a piece of fish or meat) coming from an animal, it can be determined which pixels of the scanned image refer to either food substance (fat, muscle) or bone, and the valves can be commanded so that the passage to the respective outlet nozzles for either food substance from the stuffers occurs through said valves, depending on the food substance indicated by each pixel of the image. The closing of a valve can also be commanded so that no food substance is extruded through the corresponding outlet nozzle.

Likewise, as described above, the host computer allows generating an image of a food, either from the processing of an image previously scanned and uploaded to the host computer, or a completely new image directly generated in the host computer, all this by means of the corresponding food image processing and/or generation software. Preferably, the host computer is configured to process a previously uploaded image coming from the scanning of a piece of food using CAT (computed axial tomography) technology.

Each pixel in the image indicates a food substance. The composition of the food may vary, adding, eliminating or modifying the food substances that make it up, in order to meet the specific nutritional needs of a specific group of consumers.

According to an alternative embodiment, the food extruding device may comprise a funnel connected to the outlets of the extrusion module, being superimposed on the outlet nozzles of the extrusion module. This funnel defines the shape of the food product to be obtained.

According to one design option, said funnel comprises a plurality of passage holes, wherein each passage hole is configured to channel the same extruded food substance through a set of outlet nozzles. The device is configured to extrude, through the funnel, a food with different marbling of food substances determined by the passage holes. In this way, it is not necessary to have valves that select the food substance for each stuffer, but rather the outlet nozzles corresponding to each passage hole are connected to the tubes corresponding to the same stuffer.

According to another alternative embodiment, the outlets of the extrusion module (coming from the valves and/or from internal extrusion chambers of the extrusion module) are connected directly to the passage holes of the funnel (that is, there are no outlet nozzles), the extrusion of the food substances occurring directly through the passage holes of the funnel.

According to a possible embodiment of the invention, the food extruding device comprises a shear or guillotine configured to produce cuts in a tube or column of extruded food and conveyed by a conveyor belt. In this way, pieces of food can be cut with different types of cuts (for example, fillets), for subsequent curing, packaging and marketing.

Preferably, the food extruding device comprises at least a first hopper and a second hopper, each of the at least two hoppers being connected respectively to each of the at least two stuffers. Each hopper is configured to allow the depositing of a food substance (for example fat, meat, fish, or vegetable products) and to allow the conveyance of each food substance to each stuffer.

### Description of the figures

The following figures have been included as part of the explanation of at least one embodiment of the invention.
Figure 1 shows a schematic view of a possible embodiment of the food extruding device.
Figure 2 shows a detailed view of the food hoppers and tubes towards the food extrusion area according to a possible embodiment of the food extruding device.
Figure 3 shows a detailed view of a funnel for extruding food according to a possible embodiment of the food extruding device.
Figure 4 shows a detailed view of a plurality of funnels for extruding food according to a possible embodiment of the food extruding device.
Figure 5 shows a detailed view of a possible configuration of the extrusion chambers of the extrusion module.
Figure 6 shows a detailed view of another possible configuration of the extrusion chambers.
Figure 7 shows a partially sectioned detailed view of one of the food stuffers according to a possible embodiment of the food extruding device.

### Detailed description of the invention

As mentioned above, the present invention relates to a food extruding device.

The device comprises at least two hoppers (1', 1"). Each hopper is connected to a stuffer (2) which in turn is connected by at least one tube (3) or cannula to at least one outlet nozzle (5) through an extrusion module (4).

The device is configured so that a first food (for example, meat, which can come from a cell culture of muscle mass, fish, or vegetable products) can be deposited in a first hopper (1') and a second food (for example, fatty matter) can be deposited in a second hopper (1").

Each food coming from each of the hoppers (1', 1") is passed through the corresponding stuffer (2).

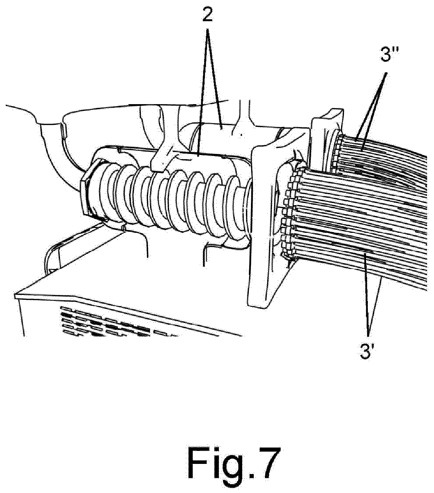

Each stuffer (2) comprises (see Figure 7) compaction and pushing means (for example, a worm screw or a piston) that causes the absorption of food from each of the hoppers (1', 1") and/or the pushing of the food from the corresponding stuffer (2), through each tube (3) and the extrusion module (4), towards the outlet nozzle(s) (5).

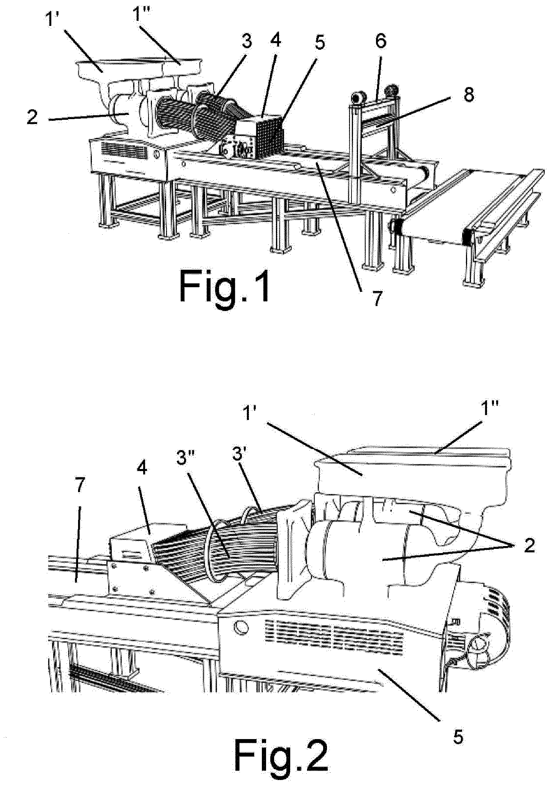

Preferably, as shown in Figure 1 and Figure 2, there is a plurality of tubes (3) configured to convey food from each stuffer (2) to a plurality of outlet nozzles (5), located at the exit of the extrusion module (4).

Preferably, the food extruding device comprises a host computer (not depicted) configured to control what type of food (coming from either hopper (1', 1")) has to be extruded through each nozzle (5) of exit.

The food extruding device may be configured to load food scanning data into the memory of the host computer. This food scanning data may come from a CAT (computed axial tomography) technology scanning of a food, such as a piece of meat or fish extracted from an animal.

By means of CAT technology, the internal structure of a given piece of food extracted from an animal can be determined, layer by layer.

Scanning data can be uploaded into the host computer.

Based on the scanning data and through a controller card, the host computer can give instructions to the extrusion module (4) for the extrusion module (4) to produce the outlet of either type of food (coming from either stuffer (2)) through each fixed outlet nozzle (5).

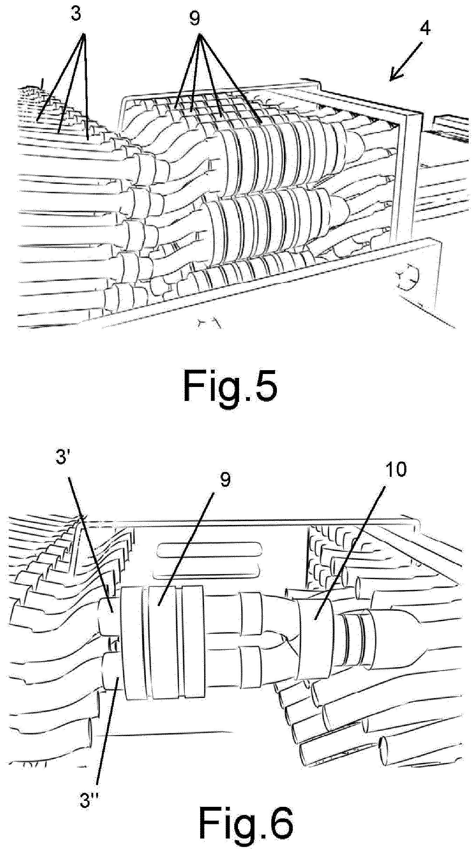

For this purpose, as shown in Figure 5, the extrusion module (4) comprises a plurality of extrusion chambers (9) that connect each of the outlet nozzles (5) to a first tube (3') and to a second tube (3"), wherein one of these two tubes (3) comes from one of the stuffers (2) and the other of these two tubes (3) comes from the other stuffer (2), that is, each of the two tubes (3', 3") reaching an extrusion chamber (9) conveys a different type of food (e.g., fat or meat).

According to a possible embodiment, the extrusion module (4) comprises 150 extrusion chambers (9) in parallel.

Each extrusion chamber (9) may comprise means for pumping the food coming from either tube (3) reaching the extrusion chamber (9).

Within each extrusion chamber (9), or in correspondence with each extrusion chamber (9) (for example, right after each extrusion chamber (9), as shown in Figure 6), a valve (10) (for example, a pneumatic valve (10)) that allows the passage of food coming from either tube (3', 3") reaching the extrusion chamber (9).

The food extruding device is configured so that each valve (10) receives orders from the host computer, through the controller card, to allow the food from either tube (3', 3") to pass towards the corresponding outlet nozzle (5) reaching the extrusion chamber (9).

Thus, based on the scanning data, the image is processed, wherein each pixel of the image corresponds to a certain type of component or food.

The controller card translates these pixels into direct orders to each of the valves (10) so that they allow the passage of food coming from either of the tubes (3) or cannulas, thus achieving that the food indicated by each pixel of the image coming from the scan data is extruded through each outlet nozzle (5).

Eventually, through the controller card, the host computer can command the complete closure of a valve (10), so that no food is extruded through the corresponding outlet nozzle (5).

The host computer is configured to select, from the image data, which part or parts of the scanned piece of food are going to be processed (being able to discard the parts corresponding to bone or cartilage), generating a pixelated image in which each pixel corresponds to a certain type of food that is going to be extruded through each outlet nozzle (5).

The image processing software allows the pixelated image to be customized, adding, deleting or modifying the properties of the image data initially loaded in order to be able to manufacture foods that meet specific requirements, depending on the specific tastes or nutritional needs of a certain sector of the population.

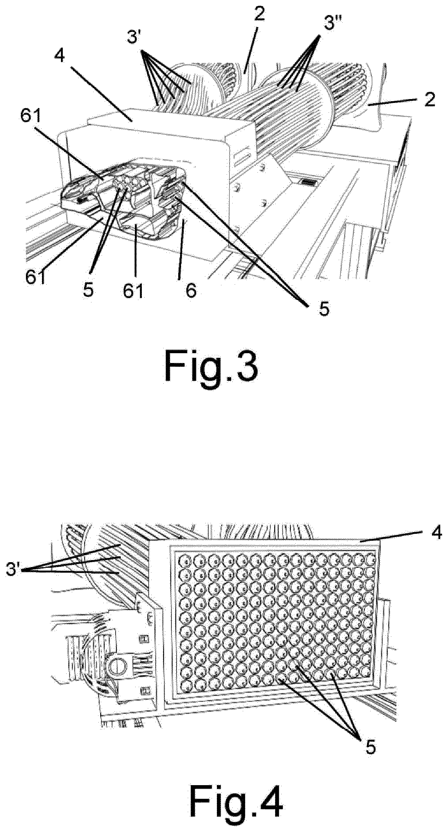

According to another possible embodiment of the food extruding device, as shown in Figure 3, the device comprises a funnel (6) which in turn comprises a plurality of preformed passage holes (61). This funnel (6) can be an interchangeable accessory that is located at the outlet of the extrusion module (4).

This funnel (6), with its passage holes (61), is configured to imitate a certain shape/profile of a food, such as a meat chop. The passage holes (61) can be configured to imitate certain marbling or internal areas of the chop, corresponding to areas of fat or muscle.

Thus, the food coming from the extrusion module (4) and coming out of the outlet nozzles (5) can be passed through the passage holes (61) of the funnel (6). Certain outlet nozzles (5) correspond to each passage hole (61) of the funnel (6). The outlet nozzles (5) corresponding to a certain passage hole (61) of the funnel (6) allow the passage of food coming from tubes (3) that come from the same stuffer (2). That is, a single type of food (e.g., only muscle or only fat) is extruded through each passage hole (61) of the funnel (6).

According to an alternative embodiment (not shown in the figures), the food extruding device does not comprise the plurality of outlet nozzles (5). In this embodiment, the funnel (6) is connected to the extrusion module (4) and the tubes (3) connect each of the stuffers (2) with respective extrusion chambers (9) of the extrusion module (4). The extrusion chambers (9) connect directly to the passage holes (61) of the funnel (6).

According to the design option, the food is extruded from the outlet nozzles (5) and conveyed directly to a conveyor belt (7). It is anticipated that the extruded piece or tube of food will be guided by means of the conveyor belt (7). In the path followed by the piece/tube/column of extruded food on this conveyor belt (7), there may be a shear (8) or guillotine configured to make cuts in the piece or tube of extruded food, making certain cuts according to the desired geometry for sale and/or consumption (for example, the extruded tube of food can be cut to form fillets).

## Claims

1. A food extruding device, **characterized in that** it comprises at least two stuffers (2), wherein each stuffer (2) is connected to an extrusion module (4) by means of at least one tube (3), wherein each stuffer (2) is configured to push a food substance through at least one tube (3) that connects each stuffer (2) to the extrusion module (4), and wherein the extrusion module (4) is configured to extrude the food substance coming from each stuffer (2) through respective outlets of the extrusion module (4), the outlets of the extrusion module being a plurality of outlet nozzles (5).

2. The food extruding device according to claim 1, **characterized in that** each outlet nozzle (5) is connected, by means of a valve (10), to a first tube (3') connected to one of the at least two stuffers (2), and to a second tube (3") connected to the other one of the at least two stuffers (2).

3. The food extruding device according to claim 2, **characterized in that** it comprises a host computer configured to command, through a controller card, the closing of the valve (10) or the opening of the passage of the valve (10) from the first tube (3') or the second tube (3 ").

4. The food extruding device according to claim 3, **characterized in that** it is configured to extrude, through each outlet nozzle (5), a food substance corresponding to the food substance indicated in a pixel of an image uploaded to the host computer or generated in the host computer from a scanning of a piece of food, wherein the host computer is configured to command the closing or opening of the passage of the valve (10) towards the first tube (3') or towards the second tube (3") based on the food substance indicated by each pixel of the image.

5. The food extruding device according to claim 3 or 4, **characterized in that** the host computer is configured to process a previously loaded image coming from the scanning of a piece of food using CAT technology.

6. The food extruding device according to claim 1, **characterized in that** it comprises a funnel (6) connected to the extrusion module (4) outlets that defines the shape of the product to be obtained.

7. The food extruding device according to claim 6, **characterized in that** the funnel (6) comprises a plurality of passage holes (61), wherein each passage hole (61) is configured to channel the same extruded food substance through a set of outlet nozzles (5), and the device is configured to extrude, through the funnel (6), a food with different marbling of food substances determined by the passage holes (61).

8. The food extruding device according to any of the preceding claims, **characterized in that** it comprises a shear (8) configured to produce cuts in a tube or column of extruded food and conveyed by a conveyor belt (7).

9. The food extruding device according to any of the preceding claims, **characterized in that** it comprises at least a first hopper (1') and a second hopper (1 "), each of the at least two hoppers (1', 1") being connected respectively to each of the at least two stuffers (2), each hopper (1', 1") being configured to allow the deposit and conveyance of each food substance to each stuffer (2).
